# EUROPEAN PATENT APPLICATION

(11) **EP 0 551 226 A1**
(43) Date of publication of application: **14.07.1993**
(21) Application number: 93400015.9
(22) Date of filing: 06.01.1993
(51) Int. Cl.: A01K 1/015, F24D 3/16

(54) **Temperature controlling flooring sections, systems, and methods**

(30) Priority: 07.01.1992 US 817694
(71) Applicant: Helmy, Nashat N., Golden Valley, Minnesota 55439 (US)
(72) Inventor: Helmy, Nashat N., Golden Valley, Minnesota 55439 (US)
(74) Representative: Joly, Jean-Jacques

(57) **Abstract**

The flooring elements, which can be wed for confining livestock, comprise hollow tubes (12) fluidically coupled to input and output manifolds (18 and 20). Fluid is run through the elements to change the floor and air temperature to which the stock is exposed. The tubes of the flooring element are preferably triangular in section, the base of the triangles defining a plane (i.e., the floor) on which the stock is confined. The system comprises one or more of the flooring elements and structure to heat/cool media passed through the tubes and to transport the media. The system preferably includes a controller to activate and control the components of the system. In the method, changing of ambient floor and air temperature is used to influence the behavior of stock confined thereon.

## Description

### Technical Field

This invention relates to ambient temperature or heat controlling flooring sections, or apparatuses and to systems which include such sections or apparatuses. This invention also relates to methods for controlling the environment in a confined area and to methods of controlling behavior or inducing a desired response in animals or poultry confined therein. This invention relates specifically to replaceable or permanent flooring sections or segments which can be used to control the ambient air or floor temperature to which contained animals or poultry ("stock") are exposed.

In a practice of the method of this invention, the system of this invention is used to control ambient air or floor temperature to which confined animals or poultry are exposed and thereby influence their behavior.

### Background of the Invention

Animals or poultry are held under confined conditions for any of a number of reasons usually relating to breeding or to milk, to fiber, or to meat production. Confined stock require adjustment of the ambient temperature to which they are exposed at different stages of their life cycles and, depending upon the climactic conditions, during different seasons of the year. Conventional approaches to this problem have involved utilization of electric lights, electric heating pads or simply heating or cooling of the entire structure in which the stock is confined. Heatin cooling an entire building simply to control the temperature to which stock dwelling on or adjacent to its floor are exposed can be economically wasteful. Heating pads tend to be chewed by the often bored, confined stock. Heating lights offer only a partial answer in that lights cannot be used to cool confined stock.

Confinement flooring currently available generally provides no capability of controlling air or floor temperature. Farmers will heat the floor beneath confined stock either by heat lamps or by placing heat mats on top as discussed above. Cooling of stock generally is accomplished by sprinkling water on them. Flooring segments or sections currently available have been heated by welding a channel beneath the flooring segment(s) and running heated (or cooled) water through a hose placed in the channel. This approach has the drawback of requiring the heating or cooling of the floor segment itself separate and apart from heating the air to which stock is exposed.

The present invention overcomes the problems encountered in the art and utilizes a novel floor segment to provide both the means to control ambient air or floor temperature and the structural member upon which confined stock may be maintained. When used in conjunction with a system described herein, efficient, precise, less expensive control of the temperature to which confined stock is exposed is provided.

### Summary of the Invention

Briefly, in one aspect, the present invention is a flooring section or element for utilization beneath and upon which confined stock may be maintained. A flooring segment of this invention comprises a plurality of elongate, substantially parallel, hollow tubes, the tubes having two ends and being sufficiently hollow to pass heating or cooling media therethrough. A flooring segment of this invention further includes input and output manifolds, the manifolds being fluid coupled to the ends of the tubes, so as to be able to introduce media therein or receive media therefrom, respectively. The input manifold also has means to receive media, generally speaking from a media or fluid temperature modifier. The output manifold also has drainage means to permit media to removed therefrom.

In a preferred practice of this aspect of the invention, the tubes have a generally triangular cross section with the base of the triangle providing a surface on which stock may live and the narrow portion of the triangle being directed downward away from the stock. In yet a further preferred practice of this invention, the tubes are coated with an abrasion resistant material to reduce corrosion and to provide a safer, more comfortable environment to the confined stock. In a further preferred practice, floor sections of the invention include separation and traction/support means for separating and supporting the tubes and for providing traction for stock living thereon. The separation and traction means generally comprise an undulating or "U-shaped" (in side view) support bar or rod which is disposed substantially perpendicular to the tubes.

A system of the present invention generally includes a plurality of the above flooring segments, means to circulate media through the elements, and means to modify the temperature of the media circulated therethrough. Examples of such media temperature modifiers include heaters or coolers. The system also includes means to connect or couple the media temperature modifier means to either or both of the input or output manifolds. Preferably, a system of this invention will include pump means for moving media between the various components thereof. Lastly, the system generally includes controller means for monitoring the ambient temperature to which the stock is exposed. The controller means comprises means for activating the media temperature modifying means, means for activating the pump means (if included) to circulate the media or both. The controller means will activate the system components to which it is connected in response to changes in ambient temperature. The controller means may be pre-programmed to activate at certain times, or it may be manually or automatically activated generally in response to temperature changes. A system of the invention will comprise various pipes, conduits, and connectors to couple the above-described components.

A method of this invention is one of inducing a desired or intended response from confined stock comprising the steps of:
a) providing a plurality flooring elements adapted to change the ambient temperature to which stock confined thereon is exposed;
b) confining the stock over the flooring elements;
c) adjusting the ambient temperature to which the stock is exposed by changing the temperature of flooring elements thereby inducing a response in the stock. Generally speaking the response induced in the stock will be one of the stock moving toward or away from a limited portion of the confinement area in which ambient air or floor temperature is increased or decreased relative to the rest of the confinement area. Precise control of ambient air temperature by utilization of this invention permits the behavior of stock to be so induced or controlled.

### Brief Description of the Figures

A better understanding of the present invention as well as some of its objects and advantages will become apparent upon consideration of the following detailed description, especially in consideration of the accompanying Figures wherein like numerals designate like parts and features throughout, and wherein:
FIG. 1 is a perspective view of a flooring section or segment of the invention;
FIG. 2 is a top view of an assembly of two flooring segments of the invention in which a central segment is raised and in which the third segment has been removed for purposes of illustration;
FIG. 3 is a side view of a section of a manifold of the present invention;
FIG. 4 is a section view of the manifold taken along line 4-4 of FIG. 3;
FIG. 5 is a section view of a supported plurality of coated tubes of the invention;
FIG. 6 is a section view of a supported plurality of uncoated tubes of the present invention;
FIG. 7 is a side view of a separation and support means or structure of the invention;
FIG. 8 is a detailed view of a portion of the structure shown in FIG. 7;
FIG. 9 is a schematic illustration of an arrangement of the components of the invention;
FIG. 10 is a sectional view of a preferred heating or cooling tube configuration and arrangement of the present invention.

### Detailed Description of the Invention

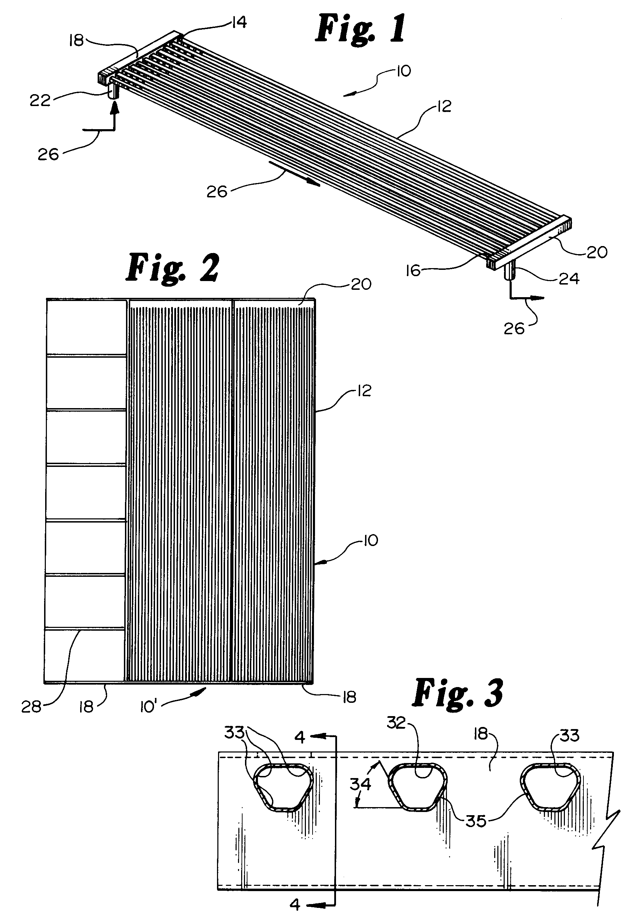

Thus there is shown in FIG. 1 a flooring section or segment 10 of the invention. Section 10 comprises a plurality of elongate, substantially parallel hollow tubes 12. Functionally speaking, the number and arrangement of tubes 12 must be sufficient to safely support stock kept thereon. Tubes 12 have first and second ends 14, 16, respectively. Ends 14, 16 are input and output ends, respectively, from input manifold 18 and output manifold 20. Input manifold 18 includes input coupling means or media receiving means (input nozzle 22) while output manifold 20 comprises output coupling means or output nozzle 24. Arrows 26 show the direction of heating or cooling media flow through section 10. Specific types of media useful in the present invention are discussed below. The direction of fluid or media flow through section 10 shown by arrows 26 is not critical and could easily be reversed.

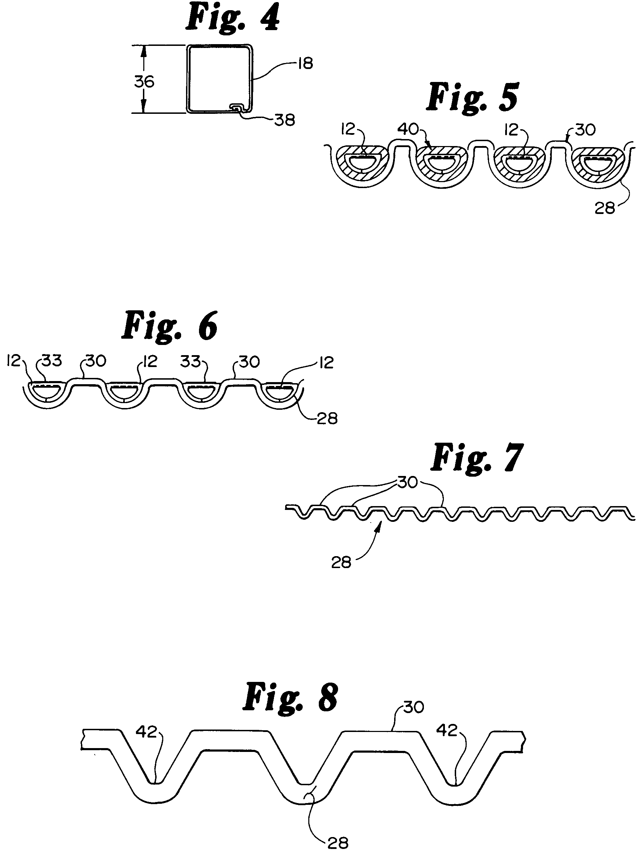

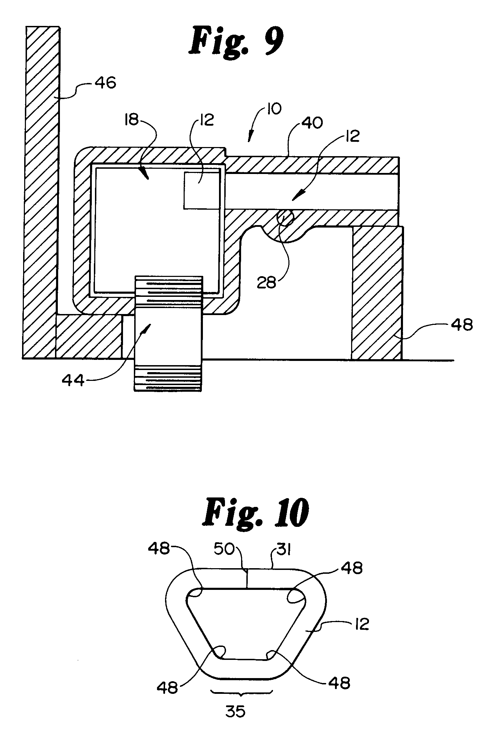

FIG. 2 illustrates an assembly of two flooring segments of the invention, a third such segment having been partially removed to illustrate the underlying support and separation means or bar. This flooring assembly (i.e., the three segments), in working embodiment, would be approximately 2.10m long and 1.50m wide. Manifolds 18, 20 are coupled to the plurality of hollow tubes 12. Central segment 10' optionally can be vertically raised relative to lateral segment 10''. Whether central segment 10' is raised relative to lateral segment 10'' will largely depend upon the type of live stock on the floor. The tubes of the third section or segment assembly of FIG. 2 have been removed to show optional tube separation and support means 28. In this embodiment, the separation and support means comprises a bar 28 which is configured (i.e., it is "W-shaped" in cross section) to support tubes 12 from beneath and to maintain their lateral separation so that animal or bird feet do not become caught therebetween. The top portions 30 of bar 28 lying between tubes 12 are substantially coplanar with the tops or stock side of the tubes 31 (best seen in FIG. 10), thereby helping to provide traction to animals living upon the flooring assembly. The configuration of bar 28 will be largely determined by the cross-sectional configuration of the tubes which is chosen. A side view of a portion of bar 28 is shown in FIG. 7.

FIG. 3 is a side view of a segment of a manifold of this invention showing the openings 32 punched therein before the tubes are affixed thereto. The manifold segment of FIG. 3 may be either an input or an output manifold but is illustrated as an input manifold. Openings 32 are rounded and generally triangular in shape corresponding to the preferred outside configuration of tubes 12. As shown, the triangular-shaped openings point downward. The sides 35 of openings 32 (as shown by arrows 34) define an approximately 60 degree interior angle. The angled sides of opening 32 are radiused (at 33), to permit rounded, triangular tubes to be used. When correspondingly-rounded, triangular tubes are inserted in openings 32 and welded therein, a substantially flat surface is provided on which stock may live.

As noted above, the preferred exterior configuration of tubes 12 is corner or edge rounded, and substantially triangular. This external configuration is important because it provides a substantially flat surface (shown at 31 of FIG. 10) upon which stock may live. In addition, this configuration is preferred because it means that the space between tubes 12 opens outwardly beneath segment 10. Widening of the space between the tubes permits animal droppings and other waste to fall more efficiently under or beneath flooring segment 10 into collection pits which are normally disposed thereunder. In this manner, collection of waste and bedding and general cleaning of the stock environment may be accomplished more easily. Primarily for purposes of cleaning, the inverted, triangular sectional configuration is especially preferred for tubes 12.

FIG. 4 is sectional view taken along line 4-4 of FIG. 3. Manifold 18 is shown to be substantially square in section. Other sectional configurations for the manifold may easily be imagined. The approximate dimension of manifold 18 as shown by dimension arrows 36 is about one inch (2.5 cm) by one inch. A lockseam 38 is employed in the bottom of manifold 18 to enclose the manifold walls. A lockseam is used primarily for ease of manufacture. Other approaches may be used for closing the manifold to contain fluid therein.

FIG. 5 shows, in section, a preferred embodiment of the invention wherein tubes 12 have a coating 40. Coating of tubes is preferred because it lessens the tendency for stock living thereon to become injured. For example, sow pigs have a tendency to step on their own mammalia, and injure themselves. Further, in prior art solid floor support structure, as the stock sides of the structures become worn, they tend to become sharpened. Provision of a coating 40 upon tubes 12, especially when the preferred, inverted triangular tubular configuration is employed, tends to reduce these problems. Also shown in FIG. 5 are the top portion or tread portion 30 of bar 28. To provide a frictional surface on which stock may more easily walk, top portion 30 may be textured or otherwise treated, e.g., by coating, to decrease their slipperiness.

Any of a variety of coatings optionally may be used on tubes 12 or bar 28. Plastisol is a particularly preferred tube coating. Polymeric coatings, as a class, tend to be preferred. For example, polyvinyl chloride (PVC) or polyurethane coatings have been found to reduce the above-noted problems. Generally speaking, a polymeric coating should provide some cushion to stock walking and lying thereon to avoid blisters and leg fatigue. A preferred coating also should be abrasion resistant so as to reduce the frequency of replacement of the tube assembly on which it is coated. A preferred coating will have a low coefficient of friction for ease of cleaning without being so low as to produce excessive slipperiness.

A preferred configuration employs metallic tubes 12 and a polymeric coating 40. It is within the contemplation of this invention that tubes 12 could be completely non-metallic. For example, tubes 12 could comprise a polymeric material. High density polypropylene could be used to fabricate the tubes. In this embodiment, there would be no requirement for a separate coating, although one could be utilized (i.e., to coat the non-metallic tube) depending upon design preferences. In this later, non-metallic version of the invention, the tube would comprise, e.g., a polymer, with a separately identifiable adherent coating thereon. As discussed above, any of a variety of coatings may be employed, with polymeric coatings constituting a preferred class.

FIG. 6 illustrates an embodiment of the invention wherein the tubes 12 are uncoated. Tubes 12 sit directly within and are supported and separated by optional traction rod or bar 28. Bar 28 will normally be supported on its ends, will be substantially longitudinal and will be disposed substantially perpendicularly to the axis of the tubes. Bar 28 is optional but is particularly necessary when, for example, tubes that are 1,50m or more in length are employed. The distance between adjacent tubes 12 will depend upon the weight of the stock being deployed, the extent to which separation of tubes is to be restricted, the strength of the tubes, and the need for enhancement of traction.

FIG. 7 is a side view of support bar or traction rod 20 with the tubes omitted. Bar upper, top, or tread portions 30 optionally may be textured or treated in some other manner (as shown at 33 in FIG. 6) to enhance the ease with which stock may walk and live thereon.

FIG. 8 is a detailed side view of a traction bar/support means such as that depicted in FIG. 7. Surface 30 would be disposed between tubes 12 and can be treated or structurally modified to enhance its frictional characteristics. In section bar 28 is substantially "W" or "V" shaped in profile with its downwardly projecting "V" interstices 42 being rounded or radiused. The radius of the intersecting "V's" or "W's" is adjusted to fit the configuration of the downwardly-projecting, narrower portion or shorter dimension (35 in FIG. 10) of triangular tube 12.

FIG. 9 is a schematic representation of an arrangement of the components of the present invention wherein a flooring segment 10 can be easily removed and replaced. Input manifold 18 is fluidically coupled to tube 12. Tube 12 is coated with a plastisol coating 40 as described above. Leading into manifold 18 is connector means or input pipe 44, which in this example is a 1/2 inch pipe. Input pipe 44 is inserted into manifold 18 at the time the flooring segment is connected to the rest of a system of this invention. Input pipe (and its counterpart output pipe which is not shown) can be either temporarily or permanently connected to input/output manifolds depending upon whether a replaceable or permanent flooring segment is intended. Generally speaking, a replaceable flooring segment would be intended because, a replaceable segment would permit this portion of the floor to be replaced when, for example, the polymeric tube coating 40 became worn. "O" rings, or other sort of suitable temporary or permanent connector may be used to couple the manifold and the input pipe. As shown, manifold 18 is held in place by "L-shaped" or angled support 46. If the first end of tube 12 is coupled to the manifold 18, then the second end is resting upon vertical member 48. Optional support bar or traction rod 28 is shown in section and is disposed substantially perpendicularly to the axis of tube 12. Bar 28 is circular in section in this schematic depiction of the invention. Other configurations for bar 28 may be employed.

FIG. 10 shows in section a preferred configuration for tube 12. Tube 12 is substantially triangular in section having rounded or radiused internal bends 48, a base 31 and an opposite, short dimension 35. Tube 12 is generally produced from 18 gauge rolled steel and is laser welded (at 50) to provide a fluid-tight, hollow tube. In its normal arrangement the shorter or narrower dimension 35 of the triangular tube would be disposed downwardly to provide the advantageous ease of cleaning discussed above. Short dimension 35 may, in fact, be pointed. While the section of FIG. 10 is preferred, it is within the contemplation of this invention that other configurations, e.g., circular, may be employed.

A system of this invention includes means to change the temperature of a heating or cooling medium such as a heater or cooler. A system of this invention also would generally include a pump means such as a fluid pump and connector means to connect and couple, fluidically, the system components. The medium temperature controller means would normally be controlled or activated by a separate control means which monitors the ambient temperature to which the stock is exposed. The same controller would also control and activate the pump means to transport heating or cooling media, as appropriate, from the heater or cooler to a flooring segment or segments of this invention. The specific details of an appropriate controller means would be well known to one of skill in this art. A preferred system of this invention is closed, providing for recirculation of media between its elements substantially without loss of fluid to the outside.

Heating or cooling media of the invention preferably restricts or inhibits rusting of the metallic tubes, if they are used. Suitable media also should have a high heat capacity to transfer, efficiently, heat or remove heat from the floor segments. Ethylene glycol mixed with an appropriate proportion of water (e.g., 60 volume percent ethylene glycol/40 volume percent water) is a particularly preferred thermal transfer medium. Essentially any high-heat capacity, non-corroding fluid could be employed. Air may be an appropriate medium under some circumstances. Metalworking fluids, because of their lubricity, constitute a class of materials which can be used as heating/cooling media, assuming they were not excessively volatile.

In a method of this invention, the above system is used to influence the behavior or stock living on the floor segments. For example, the system may be used to selectively and precisely change the temperature to which stock is exposed to induce the stock to move. For example, in FIG. 2 central segment 10' could be kept at a temperature which is lower than that of lateral segment 10''. In this manner piglets, which tend to seek the warmest portion of their environment, can be directed away from their sow. The sow would remain upon the central flooring segment (which can be slightly elevated) and thereby provide her with more comfort. Thus, the precision ambient temperature control permitted with the utilization of this invention permits at least the indirect inducement of desired behavior in stock kept thereon.

## Claims

1. A flooring section for a stock confinement structure, the section being capable of modifying ambient temperature to which the stock are exposed and supporting stock confined thereon, the section comprising:
a) a plurality of elongate, substantially parallel, hollow tubes, said tubes being capable of passing heating or cooling media therethrough;
b) input and output manifolds, the manifolds being coupled to the tubes to introduce media therein or receive media therefrom, respectively, the input manifold including means to receive media from a media temperature modifier, the output manifold including means to permit media to be removed therefrom;

2. A section according to claim 1 which further comprises means for separating and supporting the tubes so as to maintain their substantially parallel relationship, said separating means being disposed substantially perpendicular to said tubes.

3. A section according to claim 1 wherein the tubes are substantially triangular in cross-section.

4. A section according to claim 1 wherein the tubes are non-metallic.

5. A section according to claim 1 wherein the tubes are substantially polymeric.

6. A section according to claim 1 wherein the tubes comprise metal with a coating thereon.

7. A section according to claim 6 wherein the coating comprise plastisol.

8. A section according to claim 6 wherein the tubes are coated with a polymer.

9. A section according to claim 6 wherein the tubes are coated with polyvinyl chloride.

10. A section according to claim 6 wherein the tubes are coated with polyurethane.

11. A section according to claim 1 wherein the tubes are substantially triangular in section having a base and an opposite dimension, the bases of the triangles defining a plane on which the stock are confined.

12. A flooring section for a stock confinement structure, the section being capable of modifying ambient temperature to which the stock are exposed and supporting stock confined thereon, the section comprising:
a) a plurality of elongate, substantially parallel, hollow tubes, said tubes being capable of passing heating or cooling media therethrough, the tubes substantially defining the flooring plane on which the stock are disposed;
b) input and output manifolds, the manifolds being coupled to the tubes to introduce media therein or receive media therefrom, respectively, the input manifold including means to receive media from a media temperature modifier, the output manifold including means to permit media to be removed therefrom;
c) means for separating and supporting the tubes so as to maintain their substantially parallel relationship, said separating and supporting means being disposed substantially perpendicular to the axis of said tubes.

13. A section according to claim 12 wherein the tubes comprise metal with a coating thereon.

14. A section according to claim 12 wherein the tubes are non-metallic.

15. A section according to claim 12 wherein the tubes are substantially polymeric.

16. A section according to claim 12 wherein the separating and supporting means comprises a bar.

17. A method for inducing an intended response from confined stock comprising the steps of:
a) providing a plurality of flooring sections adapted to change the ambient temperature to which the stock is exposed;
b) confining the stock on the flooring elements;
c) adjusting the ambient temperature to which the stock is exposed by changing the temperature of the flooring elements thereby inducing the intended response in the stock.

18. A method according to claim 17 wherein the adjusting step is accomplished by raising the temperature of some sections.

19. A method according to claim 17 wherein adjusting step is accomplished by lowering the temperature of some sections.

20. A system for controlling ambient temperature to which confined stock is exposed, the system comprising:
(a) means for changing the temperature of a heating or cooling media;
(b) a flooring section comprising:
i. a plurality of elongate, substantially parallel, hollow tubes, said tubes being capable of passing heating or cooling media therethrough;
ii. input and output manifolds, the manifolds being coupled to the tubes to introduce media therein or receive media therefrom, respectively, the input manifold being adapted to receive media from a media temperature modifier, the output manifold being adapted to permit media to be removed therefrom;
(c) connector means for connecting the media temperature modifying means to the manifolds;
(d) pump means for circulating the media;
(e) controller means for monitoring ambient temperature and activating the media temperature modifying means, the pump means, or both to change the ambient temperature to which the stock is exposed.

21. A system according to claim 20 wherein the means for changing the temperature of a heating or cooling medium is a heater or cooler.

22. A system according to claim 20 wherein the pump means is a circulating pump.

23. A system according to claim 20 wherein the controller is programmable and activates the pump means, the media temperature modifying means or both in response to changes in ambient temperature.

24. A system according to claim 20 wherein the system is closed to the environment.

25. A system according to claim 20 wherein each of the system components is coated with a polymeric material.

26. A system according to claim 20 which comprises a plurality of flooring sections, and wherein alternate sections are maintained at higher or lower temperature relative to each other.
